# EUROPÄISCHE PATENTSCHRIFT

(11) **EP 3 964 731 B1**
(45) Veröffentlichungstag und Bekanntmachung des Hinweises auf die Patenterteilung: **30.08.2023**
(21) Anmeldenummer: 21188283.2
(22) Anmeldetag: 28.07.2021
(51) Int. Cl.: F16G 15/02, F16G 13/14, F16G 15/04

(54) **SICHERUNGSBOLZEN, KETTENSCHLOSS SOWIE VERFAHREN ZUR SICHERUNG EINES KETTENSCHLOSSES**
SAFETY BOLT, CHAIN LOCK AND METHOD FOR SECURING A CHAIN LOCK
BOULON DE BLOCAGE, SERRURE À CHAÎNE, AINSI QUE PROCÉDÉ DE BLOCAGE D'UNE SERRURE À CHAÎNE

(30) Priorität: 21.08.2020 DE 102020121972
(43) Veröffentlichungstag der Anmeldung: 09.03.2022
(73) Patentinhaber: RUD Ketten Rieger & Dietz GmbH u. Co. KG, 73432 Aalen (DE)
(72) Erfinder: Wesch, Rupert, 73457 Essingen (DE); Jaros, Julian, 73430 Aalen (DE); Buck, Clemens, 73432 Aalen (DE); Kühling, Anne, 73430 Aalen (DE)
(74) Vertreter: Flügel Preissner Schober Seidel

(56) Entgegenhaltungen:
- DE-A1- 19 914 016
- DE-U1-202006 016 032

## Beschreibung

Die vorliegende Erfindung betrifft einen Sicherungsbolzen, der zur Sicherung vor einem Auseinandergreifen zweier Kettenschlossbügel eines Kettenschlosses in eine von den beiden Kettenschlossbügeln gebildete Öffnung einsetzbar ist, aufweisend einen Grundkörper mit einer Durchgangsöffnung, wenigstens einen Federring, wenigstens zwei Kugeln und ein Sicherungselement, das in die Durchgangsöffnung eingesetzt ist. Ferner betrifft die Erfindung ein Kettenschloss mit einem Sicherungsbolzen sowie ein Verfahren zur Sicherung eines Kettenschlosses mit einem Sicherungsbolzen.

Kettenschlösser der eingangs genannten Art bestehen zumeist aus zwei kongruenten Kettenschlossbügeln, die formschlüssig ineinandergreifen, um zwei Ketten, insbesondere zwei Gliederketten, wie beispielsweise eine Rundstahlkette, miteinander zu verbinden. Hierzu greift jeder Kettenschlossbügel in ein Kettenglied der miteinander zu verbindenden Ketten. Dadurch bildet das Kettenschloss im verbundenen Zustand ein Kettenglied der zwei miteinander verbundenen Ketten.

Zur Sicherung der Kettenschlossbügel vor einem Auseinandergreifen ist es bekannt, ein Sicherungsmittel zu verwenden, das zwischen den beiden Kettenschlossbügeln derart positioniert wird, dass der zwischen den beiden Kettenschlossbügeln bestehende Formschluss aufrechterhalten wird.

Aus DE 35 16 800 C1 geht ein Kettenschloss für Gliederketten mit lösbar miteinander verbundenen Schlossteilen hervor. Zur Sicherung der beiden Schlossteile vor einem Auseinandergreifen ist ein die Innenschenkel der Schlossteile in der Schließstellung des Kettenschlosses abstützender Bolzen vorgesehen, der mindestens eine Haltenut aufweist, in die eine Rastfeder angeordnet ist. Um ein Verklanken von in das Schloss eingehängten ovalen Kettengliedern zu vermeiden, sind Antiverklankungsmittel vorgesehen, die als elastische Gummi- oder Kunststoffpuffer ausgebildet und haftend mit dem Bolzen verbunden sind.

Ferner geht aus DE 101 60 767 C2 ein Kettenschloss für eine Gliederkette mit zwei miteinander formschlüssig verbundenen Schlossteilen und einem sich an den beiden einander gegenüberliegenden Längsstegen der Schlossteile abstützenden und lösbar zwischen den Schlossteilen angeordneten Mittelstück hervor. Das Mittelstück umfasst einen Passbolzen, ein hülsenartig ausgebildetes Passelement, in das der Passbolzen bei geschlossenem Kettenschloss eingesetzt ist und eine mit ihrer äußeren Mantelfläche an den Stützflächen der Längsstege anliegende Verriegelungshülse, in die das Passelement mit seiner äußeren Mantelfläche an der inneren Mantelfläche der Verriegelungshülse anliegend eingesetzt ist. Die Verriegelungshülse und das Passelement werden von entgegengesetzten Seiten in ihre Schließposition zur Ausbildung des Mittelstücks zwischen Längsstegen eingesetzt, und die von den entgegengesetzten Seiten in ihre Schließposition eingesetzten Elemente weisen jeweils einen mit den Längsstegen der Schlossteile zusammenwirkenden Anschlag zum Begrenzen der Einsetzbewegung auf.

Zudem geht aus der DE 44 20 203 C2 ein Kettenschloss für Rundgliederketten aus zwei kongruenten Flachschlosshälften hervor, deren Schenkel an Rundungen anschließen und mit Verzahnungen formschlüssig ineinandergreifen, die an den Schenkeln der beiden Schlosshälften quer zu einer die Schenkel und die Rundungen enthaltenden Ebene angeordnet sind. Zur Sicherung gegen ein Außer-Eingriff-Geraten ist zwischen die Innenschenkel ein die Schenkel abstützendes Mittelstück eingesetzt, das eine in der Schlossebene umlaufende Nut für ein Federelement in Form einer haarnadelförmigen Stabfeder und mit einer Bohrung für einen Sicherungsstift aufweist, der in das Mittelstück quer zu der das Federelement enthaltenden Ebene eintreibbar ist und das Federelement in einem formschlüssigen Eingriff mit Nuten an den Innenseiten der Innenschenkel der beiden Schlosshälften hält. Dokument DE 199 14 016 A1 offenbart einen ähnlichen Sicherungsbolzen.

Der vorliegenden Erfindung liegt die Aufgabe zugrunde, einen Sicherungsbolzen, ein Kettenschloss sowie ein Verfahren zur Sicherung eines Kettenschlosses zu schaffen, die eine einfache und eindeutige Erkennbarkeit einer richtigen und falschen Montage ermöglichen und gleichzeitig eine Wiederverwendung des Sicherungsbolzens bei falscher Montage ausschließen.

Zur Lösung der Aufgabe werden ein Sicherungsbolzen mit den Merkmalen des Anspruchs 1, ein Kettenschloss mit den Merkmalen des Anspruchs 11 sowie ein Verfahren zur Sicherung eines Kettenschlosses mit den Merkmalen des Anspruchs 12 vorgeschlagen.

Vorteilhafte Ausgestaltungen des Sicherungsbolzens sind Gegenstand der abhängigen Ansprüche.

Gemäß einem Aspekt wird ein Sicherungsbolzen vorgeschlagen, der zur Sicherung vor einem Auseinandergreifen zweier Kettenschlossbügel eines Kettenschlosses in eine von den beiden Kettenschlossbügeln gebildete Öffnung einsetzbar ist. Der Sicherungsbolzen weist einen Grundkörper mit einer Durchgangsöffnung, wenigstens einen Federring, wenigstens zwei Kugeln und ein Sicherungselement auf, das in die Durchgangsöffnung eingesetzt ist, wobei in einer Mantelfläche des Grundkörpers eine Ringnut vorgesehen ist, in die der Federring einliegt, wobei die Ringnut mit zwei Bohrungen versehen ist, die mit der Durchgangsöffnung fluchten und in die die Kugeln einliegen, und wobei der Federring wenigstens einen sich in Längsrichtung des Grundkörpers erstreckenden Schenkel aufweist, der sich bei einem fehlerhaften Einsetzen des Sicherungsbolzens in die Öffnung verbiegt.

Der sich in Längsrichtung erstreckende Schenkel dient als Positionier- und/oder als Montagehilfe beim Einsetzen des Sicherungsbolzens in eine von den Kettenschlossbügeln gebildete Öffnung. Wird der Sicherungsbolzen richtig in die Öffnung eingesetzt beziehungsweise richtig montiert, dann ist der Schenkel von außen vollständig sichtbar. Wird der Sicherungsbolzen falsch in die Öffnung eingesetzt beziehungsweise falsch montiert, dann wird der Schenkel während des Einsetzens respektive der Montage verbogen. Dadurch wird der Sicherungsbolzen zerstört und kann nicht mehr wiederverwendet werden, da der Schenkel herausgebogen ist. Somit ist eindeutig erkennbar, ob der Sicherungsbolzen in der richtigen Lage montiert ist. Im Gegensatz dazu sind die aus dem Stand der Technik bekannten Sicherungsbolzen nach einer falschen Montage wiederverwendbar und genügen dadurch der hohen Verfügbarkeit nicht mehr. Zudem können die aus dem Stand der Technik bekannten Sicherungsbolzen wieder falsch montiert werden, was zu einem Ausfall des Kettenschlosses führen kann. Im Gegensatz dazu ist der erfindungsgemäße Sicherungsbolzen nach einer falschen Montage nicht mehr wiederverwendbar. Dadurch weist der erfindungsgemäße Sicherungsbolzen eine hohe Verfügbarkeit sowie Sicherheit auf.

Unter richtiger Montage wird vorliegend verstanden, dass der Schenkel einem U-förmigen Verbindungsabschnitt eines Kettenschlossbügels zugewandt, das heißt um 90° versetzt zu den Innenschenkeln der Kettenschlossbügel angeordnet ist. Unter falscher Montage wird vorliegend verstanden, dass der Schenkel einem Innenschenkel der Kettenschlossbügel zugewandt ist.

In einer vorteilhaften Ausgestaltung ragt der erste Schenkel senkrecht von dem Federring ab. Vorteilhaft ist der Schenkel ein senkrecht umgebogener Endabschnitt des Federringes. In einer vorteilhaften Ausgestaltung weist der Federring einen Ringabschnitt auf, von dem der Schenkel senkrecht abragt. Vorteilhaft weist der Ringabschnitt wenigstens eine Windung auf, wobei ein freies Ende der Windung zu dem Schenkel umgebogen ist. Vorteilhaft wird die Windung durch Biegen eines Federdrahtes um mindestens 300° erzeugt.

In einer vorteilhaften Ausgestaltung ist das Sicherungselement aus zwei Teilen gebildet. So kann das Sicherungselement eine erste Hülse, die in die Durchgangsöffnung eingesetzt, insbesondere eingepresst ist, und eine zweite Hülse aufweisen, die in die erste Hülse eingesetzt ist. Vorteilhaft sind beide Hülsen als Spannhülsen ausgebildet. Das Sicherungselement kann somit auch als doppelte Spannhülse bezeichnet werden. Zur Fixierung des Sicherungsbolzens in der Öffnung wird das Sicherungselement, insbesondere beide Hülsen werden in den Sicherungsbolzen eingeschlagen. Dadurch werden die beiden Kugeln radial nach außen gegen den Federring gedrückt. Infolgedessen wird der Federring jeweils in eine Ausnehmung der Kettenschlossbügel gedrückt, so dass der Sicherungsbolzen innerhalb der Öffnung fixiert ist. Das Sicherungselement kann auch als Stift, beispielsweise als Kerbstift ausgebildet sein.

In einer vorteilhaften Ausgestaltung verdeckt im montierten Zustand des Sicherungsbolzens der Federring die in die Bohrungen eingesetzten Kugeln. Vorteilhaft verdeckt im montierten Zustand des Sicherungsbolzens der Ringabschnitt die in die Bohrungen eingesetzten Kugeln.

In einer vorteilhaften Ausgestaltung sind die Bohrungen derart dimensioniert, dass ein Abschnitt der Kugeln in die Durchgangsöffnung hineinragt und weiterhin vorteilhaft an dem Sicherungselement anliegt. Dadurch werden die Kugeln beim Einschlagen des Sicherungselementes radial nach außen gedrückt. In einer vorteilhaften Ausgestaltung sind die beiden Kugeln formschlüssig in die Bohrungen eingesetzt. Weiterhin vorteilhaft sind die Bohrungen derart dimensioniert, dass die Kugeln nicht in die Durchgangsöffnung fallen können. In einer vorteilhaften Ausgestaltung fluchten die Bohrungen senkrecht zu einer Mittelachse der Durchgangsöffnung.

In einer vorteilhaften Ausgestaltung sind der Grundkörper, das Sicherungselement, die Kugel und der Federring aus Metall oder Kunststoff. Dadurch sind sämtliche Teile des Sicherungsbolzens aus einem recyclingfähigen Material, so dass der Bolzen vollständig recycelt werden kann.

Der Sicherungsbolzen könnte wie folgt montiert werden. Zunächst wird das Sicherungselement in die Durchgangsöffnung eingesetzt, insbesondere eingepresst. Anschließend werden die beiden Kugeln in die Bohrungen eingesetzt, und dann wird der Federring in die Ringnut eingesetzt. In einer vorteilhaften Ausgestaltung werden die Kugeln von außen, das heißt, von der Mantelfläche aus, in die Bohrungen eingesetzt.

In einer vorteilhaften Ausgestaltung liegen zwei Federringe in der Ringnut ein. Durch den Einsatz zweier Federringe wird sichergestellt, dass sowohl beim Einsetzen des Sicherungsbolzens von oben als auch von unten in die Öffnung eine richtige oder falsche Montage erkennbar ist. Vorteilhaft weist jeder der Federringe einen aus wenigstens einer Windung gebildeten Ringabschnitt und einen von dem Ringabschnitt senkrecht abragenden und sich in Längsrichtung erstreckenden Schenkel auf. In einer vorteilhaften Ausgestaltung liegen im montierten Zustand die Ringabschnitte der beiden Federringe aneinander, so dass sich die beiden Schenkel in entgegengesetzte Längsrichtungen erstrecken. Wenn die wenigstens eine Windung aufweisenden Ringabschnitte aneinander liegen, dann drücken die Kugeln auf zwei Windungen, so dass der Druckpunkt der Kugeln stets stabil ist.

In einer vorteilhaften Ausgestaltung liegt der Schenkel in einer Längsnut ein, die sich von der Ringnut weg erstreckt. In einer vorteilhaften Ausgestaltung liegt jeder der Schenkel in einer Längsnut ein. In einer vorteilhaften Ausgestaltung erstreckt sich eine erste Längsnut in eine erste Längsrichtung, und eine zweite Längsnut erstreckt sich in eine zweite Längsrichtung, die entgegengesetzt zu der ersten Längsrichtung ist. So kann ein sich in die erste Längsrichtung erstreckender erster Schenkel in der ersten Längsnut einliegen und ein sich in der zweiten Längsrichtung erstreckender zweiter Schenkel kann in der zweiten Längsnut einliegen. Vorteilhaft erstreckt sich die Längsnut beziehungsweise erstrecken sich die Längsnuten senkrecht von der Ringnut weg. Weiterhin vorteilhaft sind die Längsnuten in die Mantelfläche des Grundkörpers eingebracht.

In einer vorteilhaften Ausgestaltung weist der Federring zwei in entgegengesetzte Längsrichtungen erstreckende Schenkel auf. Vorteilhaft sind die Schenkel als senkrecht umgebogene Endabschnitte des Federringes ausgebildet. Vorteilhaft ragen die Schenkel senkrecht von dem Ringabschnitt ab. Weiterhin vorteilhaft erstreckt sich ein erster Schenkel in eine erste Längsrichtung, und ein zweiter Schenkel erstreckt sich in eine zweite Längsrichtung, die entgegengesetzt zu der ersten Längsrichtung ist. In einer vorteilhaften Ausgestaltung liegen sich die beiden Schenkel in einer in Längsrichtung erstreckenden Ebene gegenüber.

In einer vorteilhaften Ausgestaltung weist der Ringabschnitt zwei Windungen auf, wobei die Endabschnitte der Windungen senkrecht in entgegengesetzte Längsrichtungen umgebogen sind, um die in entgegengesetzte Längsrichtungen erstreckenden Schenkel zu bilden. Infolge der beiden Windungen ist der Druckpunkt der Kugeln stets stabil.

In einer vorteilhaften Ausgestaltung ist der Federring aus einem Federstahldraht hergestellt. Dadurch ist der Federring kostengünstig in der Herstellung. Vorteilhaft wird der Ringabschnitt samt dem sich in Längsrichtung erstreckenden Schenkel durch Biegen eines Federstahldrahts erzeugt. Weiterhin vorteilhaft wird der wenigstens eine Windung aufweisende Ringabschnitt durch Biegen des Federstahldrahts um mindestens 300° erzeugt. Ferner kann der Schenkel durch senkrechtes Umbiegen eines Endabschnittes des Federringes erzeugt werden. Wenn der Federring zwei Schenkel aufweist, so können die Schenkel durch senkrechtes Umbiegen der Endabschnitte des Federringes in entgegengesetzte Längsrichtungen erzeugt werden.

In einer vorteilhaften Ausgestaltung weist der Grundkörper zwei Grundkörperteile auf, die formschlüssig, kraftschlüssig und/oder stoffschlüssig miteinander verbunden sind. So können die beiden Grundkörperteile miteinander verpresst, insbesondere miteinander querverpresst sein. Ferner können die beiden Grundkörperteile miteinander verklebt oder mittels einer Verzinkung stoffschlüssig miteinander verbunden sein. Weiterhin können die Grundkörperteile miteinander verpresst, insbesondere querpresst sein, und mittels einer Verzinkung zusätzlich stoffschlüssig miteinander verbunden sein. Die Querverpressung kann durch eine unterschiedliche Erwärmung der beiden Grundkörperteile erfolgen. Wenn der Grundkörper zwei Grundkörperteile umfasst, wird in einer vorteilhaften Ausgestaltung zunächst das Sicherungselement in die Durchgangsöffnung eingesetzt, anschließend werden die beiden Kugeln in die Bohrungen eingesetzt, dann wird der Federring oder werden beide Federringe auf eines der Grundkörperteile aufgeschoben, so dass der Ringabschnitt oder die Ringabschnitte die in die Bohrungen eingesetzten Kugeln verdecken und der wenigstens eine Schenkel in der ersten Längsnut einliegt. Anschließend wird das zweite Grundkörperteil formschlüssig, kraftschlüssig und/oder stoffschlüssig mit dem ersten Grundkörperteil verbunden, so dass der zweite Schenkel in der zweiten Längsnut einliegt.

In einer vorteilhaften Ausgestaltung weist das erste Grundkörperteil einen Kopfabschnitt und einen Schaftabschnitt auf, wobei das zweite Grundkörperteil mit einem Endabschnitt des Schaftabschnittes verbunden ist, wobei im verbundenen Zustand der Kopfabschnitt und das zweite Grundkörperteil Nutflanken der Ringnut und der Schaftabschnitt einen Nutgrund der Ringnut bilden. Dadurch ist der Sicherungsbolzen kostengünstig in der Herstellung, da die Ringnut nur durch den Zusammenbau der beiden Grundkörperteile erzeugt wird. In einer vorteilhaften Ausgestaltung weist der Kopfabschnitt einen ersten Außendurchmesser und der Schaftabschnitt einen zweiten Außendurchmesser auf, wobei der erste Außendurchmesser größer als der zweite Außendurchmesser ist. In einer vorteilhaften Ausgestaltung weist der Endabschnitt einen dritten Außendurchmesser auf, der kleiner als der zweite Außendurchmesser ist. Dadurch wird ein Absatz geschaffen, der als Anschlag für das zweite Grundkörperteil dient, wenn dieses auf den Endabschnitt aufgeschoben, insbesondere aufgepresst wird. Weiterhin vorteilhaft weist das zweite Grundkörperteil einen vierten Außendurchmesser auf, der dem ersten Außendurchmesser entspricht.

In einer vorteilhaften Ausgestaltung ist in den Kopfabschnitt und/oder in das zweite Grundkörperteil die Längsnut eingebracht. Vorteilhaft ist die Längsnut in eine Mantelfläche des Kopfabschnitts und/oder des zweiten Grundkörperteils eingebracht. Wenn der Federring zwei in entgegengesetzte Längsrichtungen abragende Schenkel aufweist, oder wenn zwei Federringe verwendet werden, so weist sowohl der Kopfabschnitt als auch das zweite Grundkörperteil eine Längsnut auf.

In einer vorteilhaften Ausgestaltung ist das erste Grundkörperteil ein Hohlzylinder, und das zweite Grundkörperteil ist ein Ring. Vorteilhaft ist der Ring auf einen Endabschnitt des Hohlzylinders, insbesondere einen Endabschnitt des Schaftabschnittes, aufgeschoben, insbesondere aufgepresst. Bevorzugt ist der Hohlzylinder länger als der Ring.

In einer vorteilhaften Ausgestaltung weist ein Abschnitt des zweiten Grundkörperteils einen Zentrieransatz mit einer Einführschräge auf, die zusammen als Montagehilfe beim Einsetzen des Sicherungsbolzens in die Öffnung dienen. Vorteilhaft ist der Zentrieransatz aus einem Abschnitt der Mantelfläche des zweiten Grundkörperteils gebildet. Weiterhin vorteilhaft weist der Zentrieransatz einen fünften Außendurchmesser auf, der kleiner als der vierte Außendurchmesser des zweiten Grundkörperteils ist. Vorteilhaft bildet die Einführschräge einen Übergang zwischen dem vierten Außendurchmesser und dem fünften Außendurchmesser. Die Einführschräge kann als eine Fase ausgebildet sein.

Gemäß einem weiteren Aspekt wird ein Kettenschloss zur Verbindung zweier aus Gliedern gebildeter Ketten vorgeschlagen. Das Kettenschloss weist einen ersten Kettenschlossbügel, einen zweiten Kettenschlossbügel und einen Sicherungsbolzen auf, wobei die beiden Kettenschlossbügel formschlüssig ineinandergreifen und eine Öffnung bilden, in die der Sicherungsbolzen eingesetzt ist.

In einer vorteilhaften Ausgestaltung weist jeder der Kettenschlossbügel einen ersten Schenkel, einen zweiten Schenkel und einen die beiden Schenkel miteinander verbindenden Verbindungsabschnitt auf, wobei jeder der Schenkel eine Verzahnungskontur aufweist, die im verbundenen Zustand ineinandergreifen, und wobei die zweiten Schenkel im verbundenen Zustand einander zugewandt sind. Durch die kongruente Ausgestaltung der beiden Kettenschlossbügel ist eine einfache Montage des Kettenschlosses möglich. Die ersten Schenkel können als Außenschenkel und die zweiten Schenkel können als Innenschenkel bezeichnet werden. Vorteilhaft weisen die einander zugewandten Innenschenkel Ausnehmungen auf, die im zusammengesetzten Zustand die Öffnung, in die er Sicherungsbolzen eingesetzt ist, bilden. Weiterhin vorteilhaft ist in jede Ausnehmung eine Vertiefung eingebracht, in die ein Abschnitt des Federrings, insbesondere ein Abschnitt des Ringabschnitts eingreift, wenn das Sicherungselement, insbesondere wenn die zweite Hülse oder der Zapfen in die erste Hülse eingeschlagen wird.

Gemäß einem weiteren Aspekt wird ein Verfahren zum Verbinden zweier Ketten mittels eines Kettenschlosses und zur Sicherung vor einem Auseinandergreifen der Kettenschlossbügel mittels eines Sicherungsbolzens vorgeschlagen. Bei dem Verfahren wird zunächst jeweils ein Kettenschlossbügel in ein ein Ende einer Kette bildendendes Kettenglied eingehängt. Im Anschluss daran werden die zwei Kettenschlossbügel zusammengesetzt, so dass Verzahnungskonturen der Kettenschlossbügel formschlüssig ineinandergreifen und zwischen Innenschenkel der Kettenschlossbügel eine Öffnung entsteht. Anschließend wird der Sicherungsbolzen derart in die Öffnung eingesetzt, dass der wenigstens eine Schenkel um 90° versetzt zu den Innenschenkeln angeordnet ist. Danach wird die Spannhülse eingeschlagen, so dass die Kugeln die Ringfeder in Vertiefungen der Innenschenkel drücken.

90° versetzt zu den Innenschenkeln bedeutet, dass der wenigstens eine Schenkel einem U-förmigen Verbindungsabschnitt eines der Kettenschlossbügel zugewandt ist. Wenn im Schritt c) der Sicherungsbolzen falsch in die Öffnung eingesetzt wird, das heißt, der Schenkel ist dem Innenschenkel zu gewandt, dann verbiegt sich der Schenkel beim Einsetzen in die Öffnung. Dadurch wird der Sicherungsbolzen zerstört und kann nicht mehr wiederverwendet werden.

Im Folgenden werden ein Sicherungsbolzen, ein Kettenschloss sowie ein Verfahren zur Montage und Sicherung des Kettenschlosses sowie weitere Merkmale und Vorteile anhand von Ausführungsbeispielen näher erläutert, die in den Figuren schematisch dargestellt sind. Hierbei zeigt:
- Fig. 1: eine perspektivische Ansicht eines Kettenschlosses mit einem Sicherungsbolzen und Federringen gemäß einer ersten Ausführungsform;
- Fig. 2: eine perspektivische Ansicht des Sicherungsbolzens von Fig. 1;
- Fig. 3: eine Vorderansicht des Sicherungsbolzens von Fig. 2;
- Fig. 4: eine im Vergleich zu Fig. 3 um 90° verdrehte Vorderansicht des Sicherungsbolzens;
- Fig. 5: einen Schnitt durch den Sicherungsbolzen entlang der Linie V-V in Fig. 4;
- Fig. 6: einen Schnitt durch das Kettenschloss und den Sicherungsbolzen entlang der Linie VI-VI in Fig. 1;
- Fig. 7: eine vergrößerte Darstellung des Schnitts von Fig. 6; und
- Fig. 8: einen Federring gemäß einer zweiten Ausführungsform.

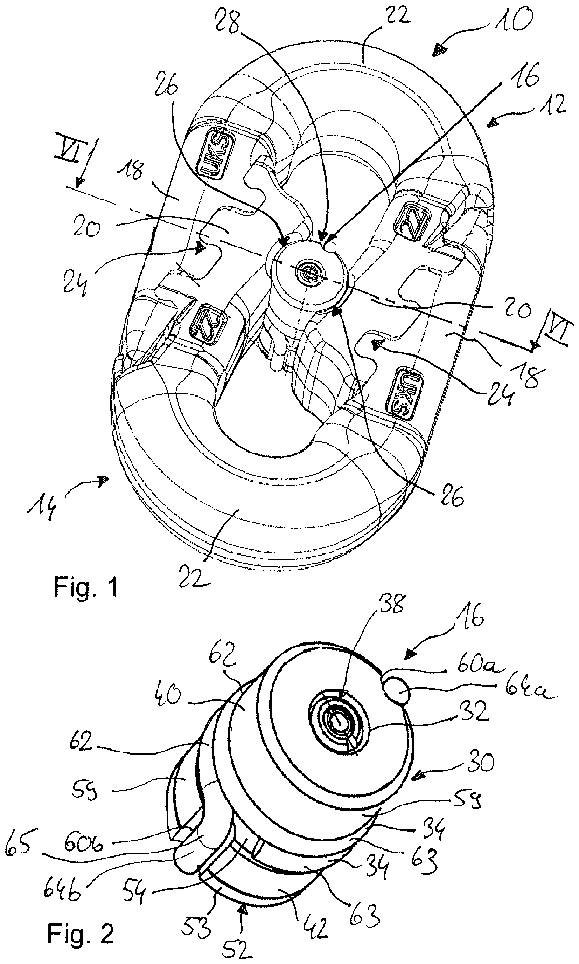

In Fig. 1 ist ein Kettenschloss 10 gezeigt, das zur Verbindung zweier nicht dargestellter Ketten, insbesondere zweier Gliederketten, wie beispielsweise einer Rundstahlkette, die in einem Kettenförderer, wie beispielsweise einem Becherwerk und einem Trogkettenförderer, eingesetzt werden, dient.

Das Kettenschloss 10 weist einen ersten Kettenschlossbügel 12, einen zweiten Kettenschlossbügel 14 und einen Sicherungsbolzen 16 auf, der die beiden Kettenschlossbügel 12, 14 vor einem Auseinandergreifen sichert.

Die beiden Kettenschlossbügel 12, 14 sind kongruent zueinander ausgebildet, wobei jeder Kettenschlossbügel 12, 14 einen Außenschenkel 18, einen Innenschenkel 20 und einen U-förmigen Verbindungsabschnitt 22 aufweist, der den Außenschenkel 18 mit dem Innenschenkel 20 verbindet.

Wie in Fig. 1 ersichtlich ist, weisen der Außenschenkel 18 und der Innenschenkel 20 jeweils eine Verzahnungskontur 24 auf, die zum Verbinden der Kettenschlossbügel 12, 14 ineinandergreifen.

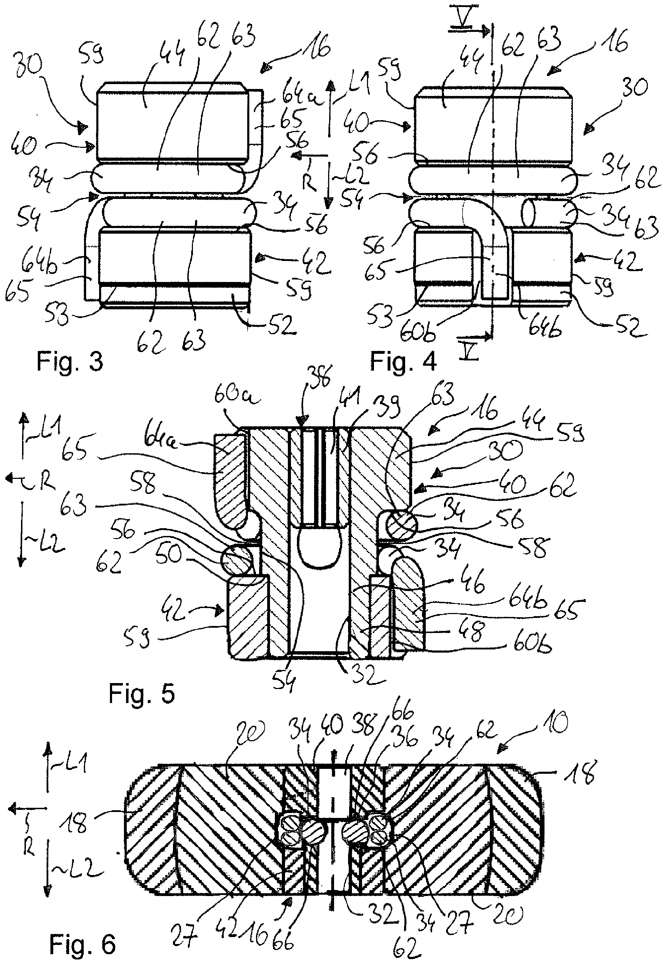

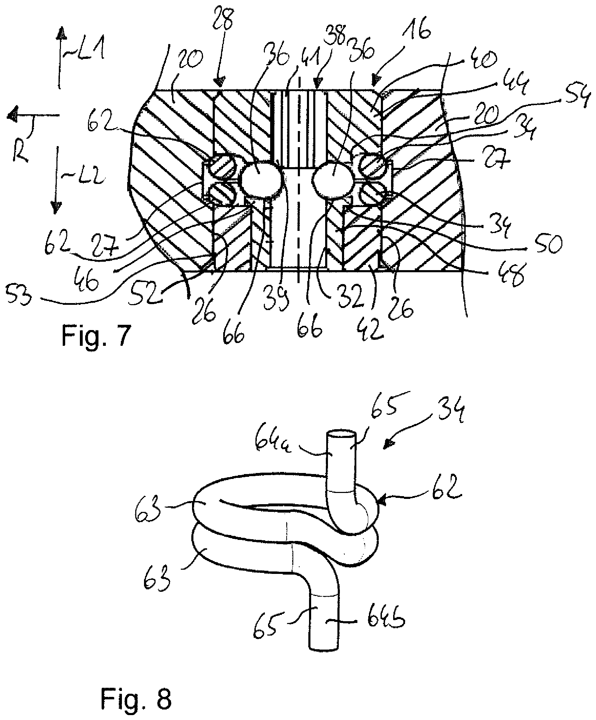

Die Innenschenkel 20 weisen jeweils eine Ausnehmung 26 auf, die im verbundenen Zustand der Kettenschlossbügel 12, 14 eine Öffnung 28 bilden, in die der Sicherungsbolzen 16 zum Sichern der Kettenschlossbügel 12, 14 vor einem Auseinandergreifen eingesetzt ist. Wie in den Figuren 6 und 7 ersichtlich ist, sind die Ausnehmungen 26 zudem mit Vertiefungen 27 versehen.

Wie insbesondere in den Figuren 2 bis 5 ersichtlich ist, weist der Sicherungsbolzen 16 einen Grundkörper 30 mit einer Durchgangsöffnung 32, zwei Federringe 34, zwei Kugeln 36 und ein Sicherungselement 38 auf.

Das Sicherungselement 38 weist eine erste Hülse 39 aus Metall oder Kunststoff, die in die Durchgangsöffnung 32 eingesetzt ist, insbesondere eingepresst ist, und eine zweiten Hülse 41 aus Metall oder Kunststoff auf, die in die erste Hülse 39 eingesetzt ist. Das Sicherungselement 38 kann vorliegend auch als doppelte Spannhülse bezeichnet werden.

Der Grundkörper 30 ist aus Metall oder Kunststoff und weist gemäß Fig. 5 ein erstes Grundkörperteil 40 und ein zweites Grundkörperteil 42 auf, die formschlüssig, kraftschlüssig und/oder stoffschlüssig miteinander verbunden sind. Insbesondere sind die beiden Grundkörperteile 40, 42 miteinander querverpresst.

Das erste Grundkörperteil 40 ist als Hohlzylinder ausgebildet und weist die Durchgangsöffnung 32, einen Kopfabschnitt 44 und einen Schaftabschnitt 46 auf. Der Kopfabschnitt 44 weist einen ersten Außendurchmesser auf, und der Schaftabschnitt 46 weist einen zweiten Außendurchmesser auf, wobei der erste Außendurchmesser größer als der zweite Außendurchmesser ist.

Wie in den Figuren 6 und 7 ersichtlich ist, sind in den Schaftabschnitt 46 zwei Bohrungen 66 eingebracht, die senkrecht zur Mittelachse des ersten Grundkörperteils 40 mit der Durchgangsöffnung 32 fluchten. In die Bohrungen 66 sind die Kugeln 36 aus Metall eingesetzt, wobei die Bohrungen 66 derart dimensioniert sind, dass ein Abschnitt der Kugeln 36 in die Durchgangsöffnung 32 ragt und an dem Sicherungselement 38 anliegt.

Auf einem Endabschnitt 48 des Schaftabschnitts 46 ist das zweite Grundkörperteil 42 aufgeschoben. Der Endabschnitt 48 weist einen dritten Außendurchmesser auf, der kleiner als der zweite Außendurchmesser ist. Dadurch wird ein Absatz 50 geschaffen, der als Anschlag für das zweite Grundkörperteil 42 dient, wenn dieses auf den Endabschnitt 48 aufgeschoben, insbesondere aufgepresst wird.

Das zweite Grundkörperteil 42 ist als Ring ausgebildet und weist einen vierten Außendurchmesser auf, der dem ersten Außendurchmesser entspricht. Ein Abschnitt des zweiten Grundkörperteils 42 weist einen Zentrieransatz 52 auf, der mit einer Einführschräge 53 versehen ist. Der Zentrieransatz 52 erleichtert zusammen mit der Einführschräge 53 das Einsetzen des Sicherungsbolzens 16 in die Öffnung 28. Der Zentrieransatz 52 ist aus einem Abschnitt einer Mantelfläche 59 des zweiten Grundkörperteils 42 gebildet und weist einen fünften Außendurchmesser auf, der kleiner als der vierte Außendurchmesser ist. Die Einführschräge 53 bildet einen Übergang von dem fünften Außendurchmesser zu dem vierten Außendurchmesser und ist als eine Fase ausgebildet.

Im zusammengesetzten Zustand der beiden Grundkörperteile 41, 42 bilden diese eine Ringnut 54, in die der Federring 34 einliegt. Wie in Fig. 3 ersichtlich ist, bilden der Kopfabschnitt 44 und das zweite Grundkörperteil 42 jeweils eine Nutflanke 56 der Ringnut 54, und der Schaftabschnitt 46 bildet einen Nutgrund 58 der Ringnut 54.

Wie insbesondere den Figuren 2 bis 4 zu entnehmen ist, sind in eine Mantelfläche 59 des Kopfabschnitts 44 und des zweiten Grundkörperteils 42 Längsnuten 60a, 60b eingebracht, die mit der Ringnut 54 in Verbindung stehen und sich von dieser senkrecht in entgegengesetzte Längsrichtungen L1, L2 weg erstrecken. So erstreckt sich eine erste Längsnut 60a in eine erste Längsrichtung L1 und eine zweite Längsnut 60b erstreckt sich in eine zweite Längsrichtung L2.

Die Federringe 34 sind aus einem Federstahldraht gebogen, wobei jeder Federring 34 einen Ringabschnitt 62 und einen von dem Ringabschnitt 62 senkrecht abragenden Schenkel 64a, 64 aufweist.

Der Ringabschnitt 62 selbst weist eine Windung 63 auf, die durch Biegen des Federstahldrahtes um mindestens 300° erzeugt wird. Der Schenkel 64a, 64b wird durch Umbiegen eines freien Endabschnittes 65 des Federringes 34 erzeugt.

Wie in den Figuren 2 bis 5 ersichtlich ist, liegen die Ringabschnitte 62 der Federringe 34 derart in der Ringnut 54 ein, dass die Ringabschnitte 62 einander zugewandt sind und dass sich die Schenkel 64a, 64 in entgegengesetzte Längsrichtungen L1, L2 erstrecken, wobei ein erster Schenkel 64a in der ersten Längsnut 60a und ein zweiter Schenkel 64b in der zweiten Längsnut 60b einliegt.

Im Folgenden wird ein mögliches Verfahren zur Montage des Sicherungsbolzens 16 beschrieben. Zunächst wird das Sicherungselement 38 in die Durchgangsöffnung 32 eingesetzt, insbesondere eingepresst. Anschließend werden die Kugeln 36 in die Bohrungen 66 des Schaftabschnitts 46 eingesetzt. Dann werden die Federringe 34 derart auf das erste Grundkörperteil 40 aufgeschoben, dass einer der Ringabschnitte 62 an der durch den Kopfabschnitt 44 gebildeten Nutflanke 56 anliegt und der erste Schenkel 64a in der ersten Längsnut 60a einliegt. Danach wird das zweite Grundkörperteil 42 auf den Endabschnitt 48 aufgeschoben beziehungsweise aufgepresst, bis das zweite Grundkörperteil 42 an dem Absatz 50 an anliegt und der zweite Schenkel 64b in der zweiten Längsnut 60b einliegt.

Im Folgenden wird ein mögliches Verfahren zum Verbinden zweier Ketten und zur Sicherung der beiden Kettenschlossbügel 12, 14 vor einem Auseinandergreifen beschrieben. Zunächst wird jeweils ein Kettenschlossbügel 12, 14 in ein ein Ende einer nicht dargestellten Kette bildendendes Kettenglied eingehängt. Im Anschluss daran werden die Kettenschlossbügel 12, 14 derart zusammengesetzt, dass die Verzahnungskonturen 24 ineinandergreifen. Dann wird der Sicherungsbolzen 16 derart in die Öffnung 28 eingesetzt, insbesondere eingepresst, dass die beiden Schenkel 64a, 64b dem U-förmigen Verbindungsabschnitt 22 zugewandt sind, das heißt um 90° versetzt zu den Innenschenkeln 20 angeordnet sind. Anschließend wird das Sicherungselement 38, insbesondere werden beide Hülsen 39, 41 in die Durchgangsöffnung 32 eingeschlagen, so dass die Kugeln 36 in Radialrichtung R nach außen gedrückt werden. Infolgedessen werden die Ringabschnitte 62 in Radialrichtung R geweitet und in die Vertiefungen 27 der Ausnehmungen 26 gedrückt, wie dies in den Figuren 6 und 7 gezeigt ist. Dadurch ist der Sicherungsbolzen 16 vor einem Herausziehen beziehungsweise Herausdrücken aus der Öffnung 28 gesichert.

Wenn der Sicherungsbolzen 16 derart in die Öffnung 28 eingesetzt wird, dass die Schenkel 64a, 64b den Innenschenkeln 20 zugewandt sind, dann verbiegen sich die Schenkel 64a, 64b beim in der Öffnung 28. Dadurch wird der Sicherungsbolzen 16 zerstört und kann nicht mehr wiederverwendet werden.

Nachfolgend wird eine weitere Ausführungsform des Federrings 34 beschrieben, wobei für gleiche und/oder funktionsgleiche Teile dieselben Bezugszeichen verwendet werden.

Der in Fig. 8 gezeigte Federring 34 unterscheidet sich von den in den Figuren 1 bis 7 gezeigten Federringen 34 dadurch, dass der Federring 34 die beiden in entgegengesetzte Längsrichtungen L1, L2 erstreckende Schenkel 64a, 64b aufweist. Zudem ist der Ringabschnitt 62 aus zwei Windungen 63 gebildet.

Die beiden Schenkel 64a, 64b werden durch Umbiegen der freien Endabschnitte 65 in entgegengesetzte Längsrichtungen L1, L2 erzeugt.

Die sich in entgegengesetzte Längsrichtungen L1, L2 erstreckende Schenkel 64a, 64b dienen als Positionier- und/oder als Montagehilfe beim Einsetzen des Sicherungsbolzens 16 in die von den Kettenschlossbügeln 12, 14 gebildete Öffnung 28. Wird der Sicherungsbolzen 16 ordnungsgemäß in die Öffnung 28 eingesetzt, dann sind die Schenkel 64a, 64b von außen vollständig sichtbar. Wird der Sicherungsbolzen 16 falsch in die Öffnung 28 eingesetzt, dann werden die Schenkel 64a, 64b während des Einsetzens respektive der Montage verbogen. Dadurch wird der Sicherungsbolzen 16 zerstört und kann nicht mehr wiederverwendet werden, weil die Schenkel 64a, 64b herausgebogen sind. Somit ist eindeutig erkennbar, dass der Sicherungsbolzen 16 falsch montiert worden ist.

### Bezugszeichenliste

- 10: Kettenschloss
- 12: erster Kettenschlossbügel
- 14: zweiter Kettenschlossbügel
- 16: Sicherungsbolzen
- 18: Außenschenkel
- 20: Innenschenkel
- 22: U-förmiger Verbindungsabschnitt
- 24: Verzahnungskontur
- 26: Ausnehmung
- 27: Vertiefung
- 28: Öffnung
- 30: Grundkörper
- 32: Durchgangsöffnung
- 34: Federring
- 36: Kugel
- 38: Sicherungselement
- 39: erste Hülse
- 40: erstes Grundkörperteil
- 41: zweite Hülse
- 42: zweites Grundkörperteil
- 44: Kopfabschnitt
- 46: Schaftabschnitt
- 48: Endabschnitt
- 50: Absatz
- 52: Zentrieransatz
- 53: Einführschräge
- 54: Ringnut
- 56: Nutflanke
- 58: Nutgrund
- 59: Mantelfläche
- 60a: erste Längsnut
- 60b: zweite Längsnut
- 62: Ringabschnitt
- 63: Windung
- 64a: erster Schenkel
- 64b: zweiter Schenkel
- 65: Endabschnitt
- 66: Bohrung

- L1: erste Längsrichtung
- L2: zweite Längsrichtung
- R: Radialrichtung

## Patentansprüche

1. Sicherungsbolzen (16), der zur Sicherung vor einem Auseinandergreifen zweier Kettenschlossbügel (12, 14) eines Kettenschlosses (10) in eine von den beiden Kettenschlossbügeln (12, 14) gebildete Öffnung (28) einsetzbar ist, aufweisend einen Grundkörper (30) mit einer Durchgangsöffnung (32), wenigstens einen Federring (34), wenigstens zwei Kugeln (36) und ein Sicherungselement (38), das in die Durchgangsöffnung (32) eingesetzt ist, wobei in einer Mantelfläche (59) des Grundkörpers (30) eine Ringnut (54) vorgesehen ist, in die der Federring (34) einliegt, wobei die Ringnut (54) mit zwei Bohrungen (66) versehen ist, die mit der Durchgangsöffnung (32) fluchten und in die die Kugeln (36) einliegen, **dadurch gekennzeichnet, dass** der Federring (34) wenigstens einen sich in Längsrichtung des Grundkörpers (30) erstreckenden Schenkel (64) aufweist, der sich bei einem fehlerhaften Einsetzen des Sicherungsbolzens (16) in die Öffnung (28) verbiegt.

2. Sicherungsbolzen (16) nach Anspruch 1, **dadurch gekennzeichnet, dass** zwei Federringe (34) in der Ringnut (54) einliegen.

3. Sicherungsbolzen (16) nach Anspruch 1 oder 2, **dadurch gekennzeichnet, dass** der Schenkel (64) in einer Längsnut (60a, 60b) einliegt, die sich von der Ringnut (54) weg erstreckt.

4. Sicherungsbolzen (16) nach Anspruch 1, **dadurch gekennzeichnet, dass** der Federring (34) zwei in entgegengesetzte Längsrichtungen erstreckende Schenkel (64) aufweist.

5. Sicherungsbolzen (16) nach einem der vorhergehenden Ansprüche,
**dadurch gekennzeichnet, dass** der Federring (34) aus einem Federstahldraht hergestellt ist.

6. Sicherungsbolzen (16) nach einem der vorhergehenden Ansprüche,
**dadurch gekennzeichnet, dass** der Grundkörper (30) zwei Grundkörperteile (40, 42) aufweist, die formschlüssig, kraftschlüssig und/oder stoffschlüssig miteinander verbunden sind.

7. Sicherungsbolzen (16) nach Anspruch 6, **dadurch gekennzeichnet, dass** das erste Grundkörperteil (40) einen Kopfabschnitt (44) und einen Schaftabschnitt (46) aufweist, wobei das zweite Grundkörperteil (42) mit einem Endabschnitt (48) des Schaftabschnittes (46) verbunden ist, wobei im verbundenen Zustand der Kopfabschnitt (44) und das zweite Grundkörperteil (42) Nutflanken (56) der Ringnut (54) und der Schaftabschnitt (46) einen Nutgrund (58) der Ringnut (54) bilden.

8. Sicherungsbolzen (16) nach Anspruch 7, **dadurch gekennzeichnet, dass** in den Kopfabschnitt (44) und/oder in das zweite Grundkörperteil (42) die Längsnut (60a, 60b) eingebracht ist.

9. Sicherungsbolzen (16) nach einem der Ansprüche 6 bis 8, **dadurch gekennzeichnet, dass** das erste Grundkörperteil (40) ein Hohlzylinder ist und das zweite Grundkörperteil (42) ein Ring ist.

10. Sicherungsbolzen (16) nach einem der Ansprüche 6 bis 9, **dadurch gekennzeichnet, dass** das zweite Grundkörperteil (42) einen Zentrieransatz (52) mit einer Einführschräge (53) aufweist, die zusammen als Montagehilfe beim Einsetzen des Sicherungsbolzens (16) in die Öffnung (28) dienen.

11. Kettenschloss (10) zur Verbindung zweier aus Gliedern gebildeten Ketten, aufweisend einen ersten Kettenschlossbügel (12), einen zweiten Kettenschlossbügel (14) und einen Sicherungsbolzen (16) nach einem der Ansprüche 1 bis 10, wobei die beiden Kettenschlossbügel (12, 14) formschlüssig ineinandergreifen und eine Öffnung (28) bilden, in die der Sicherungsbolzen (16) eingesetzt ist.

12. Verfahren zum Verbinden zweier Ketten mittels eines Kettenschlosses (10) nach Anspruch 11 und zur Sicherung vor einem Auseinandergreifen der Kettenschlossbügel (12, 14) des Kettenschlosses (10) mittels eines Sicherungsbolzens (16) nach einem der Ansprüche 1 bis 10, das folgende Schritte aufweist:
a. Einhängen jeweils eines Kettenschlossbügels (12, 14) in jeweils ein Ende einer aus Kettengliedern gebildeten Kette;
b. Zusammensetzen der Kettenschlossbügel (12, 14), so dass Verzahnungskonturen (24) der Kettenschlossbügel (12, 14) formschlüssig ineinandergreifen und zwischen Innenschenkeln (20) der Kettenschlossbügel (12, 14) eine Öffnung (28) entsteht;
c. Einsetzen des Sicherungsbolzens (16) in die Öffnung (28) derart, dass der wenigstens eine Schenkel (64a, 64b) um 90° versetzt zu den Innenschenkeln (20) angeordnet ist; und
d. Einschlagen des Sicherungselementes (38), so dass die Kugeln (36) den Federring (34) in Vertiefungen (27) der Innenschenkel (20) drücken.

## Claims

1. A safety bolt (16) which can be inserted into an opening (28) formed by the two chain lock brackets (12, 14) for securing against disengagement of the chain lock brackets (12, 14) of the chain lock (10), the safety bolt (16) having a base body (30) with a through-opening (32), at least one spring ring (34), at least two balls (36) and a securing element (38) which is inserted into the through-opening (32), wherein an annular groove (54) is provided in a circumferential surface (59) of the base body (30), into which annular groove (54) the spring ring (34) is inserted, wherein the annular groove (54) is provided with two bores (66) which are aligned with the through-opening (32) and into which the balls (36) are inserted **characterized in that** the spring ring (34) has at least one leg (64) extending in the longitudinal direction of the base body (30), which leg (64) bends in the event of incorrect insertion of the safety bolt (16) into the opening (28).

2. A safety bolt (16) according to claim 1, **characterized in that** two spring rings (34) are located in the annular groove (54).

3. A safety bolt (16) according to claim 1 or 2, **characterized in that** the leg (64) is engaged in a longitudinal groove (60a, 60b) extending away from the annular groove (54).

4. A safety bolt (16) of claim 1, **characterized in that** the spring ring (34) has two legs (64) extending in opposite longitudinal directions.

5. A safety bolt (16) according to any one of the preceding claims, **characterized in that** the spring ring (34) is made of a spring steel wire.

6. A safety bolt (16) according to one of the preceding claims, **characterized in that** the base body (30) has two base body parts (40, 42) which are connected to one another in a form-fitting, force-fitting and/or material-fitting manner.

7. A safety bolt (16) according to claim 6, **characterized in that** the first base body part (40) has a head portion (44) and a shank portion (46), the second base body part (42) being connected to an end portion (48) of the shank portion (46), wherein, in the connected state, the head portion (44) and the second base body part (42) form groove flanks (56) of the annular groove (54) and the shank portion (46) forms a groove bottom (58) of the annular groove (54).

8. A safety bolt (16) according to claim 7, **characterized in that** the longitudinal groove (60a, 60b) is formed in the head portion (44) and/or in the second base body part (42).

9. A safety bolt (16) according to any one of claims 6 to 8, **characterized in that** the first base body part (40) is a hollow cylinder and the second base body part (42) is a ring.

10. A safety bolt (16) according to any one of claims 6 to 9, **characterized in that** the second base body part (42) has a centering attachment (52) with an insertion bevel (53), which together serve as an assembly aid when inserting the safety bolt (16) into the opening (28).

11. A chain lock (10) for connecting two chains formed of links, comprising a first chain lock bracket (12), a second chain lock bracket (14) and a safety bolt (16) according to any one of claims 1 to 10, wherein the two chain lock brackets (12, 14) engage one another in a form-fitting manner and form an opening (28) into which the safety bolt (16) is inserted.

12. Method for connecting two chains by means of a chain lock (10) according to claim 11 and for securing against disengagement of the chain lock brackets (12, 14) of the chain lock (10) by means of a safety bolt (16) according to any one of claims 1 to 10, comprising the following steps:
a. hooking a chain lock bracket (12, 14) into respective one end of a chain formed from chain links;
b. assembling the chain lock brackets (12, 14) so that toothed contours (24) of the chain lock brackets (12, 14) engage in one another in a form-fitting manner and an opening (28) is formed between inner legs (20) of the chain lock brackets (12, 14);
c. inserting the safety bolt (16) into the opening (28) in such a way that the at least one leg (64a, 64b) is offset by 90° from the inner legs (20); and
d. hammering in the securing element (38) so that the balls (36) press the spring ring (34) into recesses (27) of the inner legs (20).

## Revendications

1. Boulon de blocage (16) qui, en vue d'assurer un blocage à l'encontre d'un dégagement de deux étriers de joint de chaîne (12, 14) d'un joint de chaîne, peut être inséré dans une ouverture (28) formée par les deux étriers de joint de chaîne (12, 14), comprenant un corps de base (30) avec une ouverture traversante (32), au moins une rondelle élastique (34), au moins deux billes (36) et un élément de blocage (38) inséré dans l'ouverture traversante (32),
une rainure annulaire (54) étant prévue dans une surface enveloppe (59) du corps de base (30), dans laquelle est logée la rondelle élastique (34), la rainure annulaire (54) étant pourvue de deux alésages (66) qui sont en alignement avec l'ouverture traversante (32) et dans lesquels sont logées les billes (36),
**caractérisé en ce que**
la rondelle élastique (34) comprend au moins une branche (64) s'étendant dans la direction longitudinale du corps de base (30), qui se déforme en cas d'insertion erronée du boulon de blocage (16) dans l'ouverture (28).

2. Boulon de blocage (16) selon la revendication 1,
**caractérisé en ce que** deux rondelles élastiques (34) sont logées dans la rainure annulaire (54).

3. Boulon de blocage (16) selon la revendication 1 ou 2,
**caractérisé en ce que** la branche (64) est logée dans une rainure longitudinale (60a, 60b) qui s'étend en éloignement de la rainure annulaire (54).

4. Boulon de blocage (16) selon la revendication 1,
**caractérisé en ce que** la rondelle élastique (34) présente deux branches (64) s'étendant dans des directions longitudinales opposées.

5. Boulon de blocage (16) selon l'une des revendications précédentes, **caractérisé en ce que** la rondelle élastique (34) est fabriquée à partir d'un fil d'acier à ressort.

6. Boulon de blocage (16) selon l'une des revendications précédentes, **caractérisé en ce que** le corps de base (30) présente deux parties de corps de base (40, 42) qui sont reliées entre elles par coopération de forme, de force et/ou de matière.

7. Boulon de blocage (16) selon la revendication 6,
**caractérisé en ce que** la première partie de corps de base (40) présente une portion de tête (44) et une portion de tige (46), la deuxième partie de corps de base (42) étant reliée à une portion d'extrémité (48) de la portion de tige (46), la portion de tête (44) et la deuxième partie de corps de base (42) formant, à l'état relié, des flancs de rainure (56) de la rainure annulaire (54), et la portion de tige (46) formant un fond de rainure (58) de la rainure annulaire (54).

8. Boulon de blocage (16) selon la revendication 7,
**caractérisé en ce que** la rainure longitudinale (60a, 60b) est ménagée dans la portion de tête (44) et/ou dans la deuxième partie de corps de base (42).

9. Boulon de blocage (16) selon l'une des revendications 6 à 8,
**caractérisé en ce que** la première partie de corps de base (40) est un cylindre creux, et la deuxième partie de corps de base (42) est un anneau.

10. Boulon de blocage (16) selon l'une des revendications 6 à 9,
**caractérisé en ce que** la deuxième partie de corps de base (42) présente un talon de centrage (52) ayant un chanfrein d'insertion (53), qui servent ensemble d'aide au montage lors de l'insertion du boulon de blocage (16) dans l'ouverture (28).

11. Joint de chaîne (10) destiné à relier deux chaînes formées de maillons, présentant un premier étrier de joint de chaîne (12), un deuxième étrier de joint de chaîne (14) et un boulon de blocage (16) selon l'une des revendications 1 à 10, les deux étriers de joint de chaîne (12, 14) s'engageant l'un dans l'autre par coopération de forme et formant une ouverture (28) dans laquelle est inséré le boulon de blocage (16).

12. Procédé de liaison de deux chaînes au moyen d'un joint de chaîne (10) selon la revendication 11 et de blocage à l'encontre d'un désengagement des étriers de joint de chaîne (12, 14) du joint de chaîne (10) au moyen d'un boulon de blocage (16) selon l'une des revendications 1 à 10, comprenant les étapes suivantes consistant à :
a. accrocher un étrier de joint de chaîne (12, 14) respectif dans une extrémité respective d'une chaîne formée de maillons ;
b. assembler les étriers de joint de chaîne (12, 14) de sorte que les contours dentés (24) des étriers de joint de chaîne (12, 14) s'engagent l'un dans l'autre par coopération de forme et qu'une ouverture (28) se forme entre les branches intérieures (20) des étriers de joint de chaîne (12, 14) ;
c. insérer le boulon de blocage (16) dans l'ouverture (28) de telle sorte que ladite au moins une branche (64a, 64b) soit disposée avec un décalage de 90° par rapport aux branches intérieures (20) ; et
d. enfoncer l'élément de blocage (38) de telle sorte que les billes (36) poussent la rondelle élastique (34) dans des creux (27) des branches intérieures (20).
